# EUROPÄISCHE PATENTSCHRIFT

(11) **EP 1 695 525 B1**
(45) Veröffentlichungstag und Bekanntmachung des Hinweises auf die Patenterteilung: **07.01.2009**
(21) Anmeldenummer: 04790381.0
(22) Anmeldetag: 14.10.2004
(51) Int. Cl.: H04M 1/00

(54) **VORRICHTUNG ZUM VERBINDEN EINES TRÄGERTEILES UND EINES ANBAUTEILES**
DEVICE FOR CONNECTING A CARRIER PART AND AN ADD-ON PIECE
DISPOSITIF POUR ASSEMBLER UNE PIECE DE SUPPORT ET UNE PIECE A RAPPORTER

(30) Priorität: 12.12.2003 DE 10358683
(43) Veröffentlichungstag der Anmeldung: 30.08.2006
(73) Patentinhaber: A. RAYMOND ET CIE, 38000 Grenoble (FR)
(72) Erfinder: BÜGNER, Eric, 79256 Buchenbach (DE)
(74) Vertreter: Rüttgers, Joachim
(86) Internationale Anmeldenummer: PCT/EP2004/011516
(87) Internationale Veröffentlichungsnummer: WO 2005/060331

(56) Entgegenhaltungen:
- EP-A- 0 648 944
- DE-A1- 19 807 953
- FR-A- 2 800 833
- US-B1- 6 594 870

## Beschreibung

Die Erfindung betrifft eine Vorrichtung gemäß dem Oberbegriff des Patentanspruches 1.

Eine derartige Vorrichtung ist aus der US 6,594,870 B1 bekannt. Die vorbekannte Vorrichtung verfügt über ein Verbindungsteil, das zwei über ein Zwischenstück miteinander verbundene Flanschscheiben aufweist. Weiterhin ist ein Aufnahmeteil vorgesehen, das zum Befestigen an einem Anbauteil vorgesehen und käfigartig ausgebildet ist. An seiner dem Anbauteil abgewandten Seite verfügt das Aufnahmeteil für eine gewisse seitliche Beweglichkeit über eine Anzahl von Armen, die innenseitig mit einem ringartigen geöffneten Aufnahmeelement und außenseitig in einem Befestigungsbereich mit Seitenwänden des Aufnahmeteiles verbunden sind. Die Arme sind gerade ausgebildet und erstrecken sich in radialer Richtung zwischen dem Aufnahmeelement und den jeweiligen Befestigungsbereich. In das Aufnahmeelement ist das Zwischenstück einfügbar, so dass die Flanschscheiben die Arme im Bereich des Aufnahmeelementes einschließen. Weiterhin ist das Verbindungsteil mit einer Raststruktur ausgebildet. Schließlich weist die vorbekannte Vorrichtung ein Verankerungsteil auf, das mit einem Trägerteil verbindbar ist. Das Verankerungsteil ist mit einer weiteren Raststruktur ausgebildet, die zum Einstellen eines Abstandes zwischen dem Verbindungsteil und dem Verankerungsteil mit der Raststruktur des Verbindungsteiles zusammenwirkt.

Aus der DE 198 07 953 A1 ist eine Vorrichtung zum Verbinden eines Anbauteiles mit einem Trägerteil bekannt, die über ein Aufnahmeteil verfügt. Das Aufnahmeteil bei dieser Vorrichtung ist mit einer Grundplatte ausgebildet, die mit dem Anbauteil verbindbar ist. Der Mittenbereich der Grundplatte ist mit einer runden Ausnehmung ausgebildet, von deren Rand aus sich drei verhältnismäßig dünne Arme spiralförmig nach innen erstrecken. Die Arme enden innenseitig an einem geschlossenen Innenring. An der von dem Anbauteil wegweisenden Seite der Grundplatte ist das Aufnahmeteil mit einer Tasche ausgebildet, in die über einen ein Zwischenstück des Verbindungsteiles umschließenden Einführschlitz eine rundliche Flanschscheibe eines Verbindungsteiles einfügbar ist. Die radialen Dimensionen der Flanschscheibe sowie des Zwischenstückes sind kleiner als die der Tasche sowie des Einführschlitzes. Das Verbindungsteil verfügt über eine weitere Flanschscheibe, die außerhalb der Tasche angeordnet ist, wobei eine zu der Grundplatte parallele Wand der Tasche zwischen den Flanschscheiben eingefügt ist. An der der Grundplatte zugewandten Seite der innerhalb der Tasche angeordneten Flanschscheibe ist eine kuppelartige Erhebung ausgebildet, die nach Einfügen des Verbindungsteiles in das Aufnahmeteil innerhalb des Innenringes positioniert ist. Dadurch ist das Verbindungsteil zum Toleranzausgleich in zwei Richtungen seitlich versetzbar.

Der Erfindung liegt die Aufgabe zugrunde, eine Vorrichtung der eingangs genannten Art anzugeben, die eine hohe Stabilität aufweist sowie mit verhältnismäßig großen Abzugskräften beaufschlagbar ist und dabei bei einem einfachen Aufbau über einen guten Toleranz-ausgleich verfügt.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung die Arme wenigstens abschnittsweise abgewinkelt sind und die Flanschscheiben die Arme sowie randseitig den plattenförmigen Bereich einschließen, an den außenseitig die Arme angesetzt sind, ist bei einem guten Toleranzausgleich in insgesamt drei Dimensionen eine sehr stabile und auch gegenüber verhältnismäßig hohen Abzugskräften widerstandsfähige Verbindung zwischen dem Aufnahmeteil und dem Verbindungsteil erzielt.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
Fig. 1 in einer perspektivischen Explosionsansicht ein bevorzugtes Ausführungsbeispiel der Erfindung mit einem Anbauteil, einem Verbindungsteil und einem Verankerungsteil,
Fig. 2 bei dem Ausführungsbeispiel gemäß Fig. 1 einen Schnitt durch ein Zwischenstück des Verbindungsteiles mit Blick auf das Anbauteil und
Fig. 3 einen Längsschnitt durch das Ausführungsbeispiel gemäß Fig.
1 und Fig. 2 in einer Einbausituation mit einem Trägerteil und einem Anbauteil.

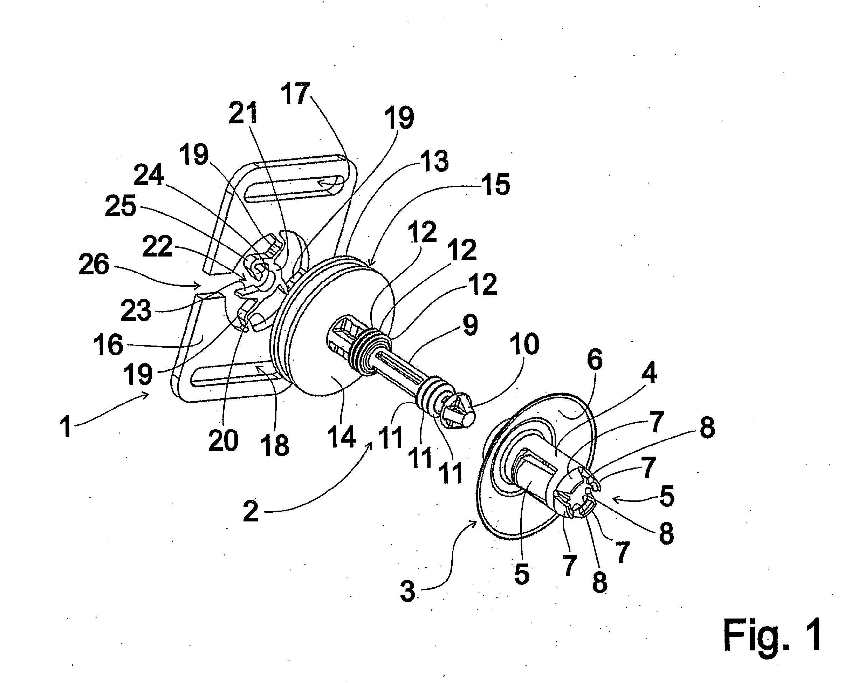

Fig. 1 zeigt in einer perspektivischen Explosionsansicht ein bevorzugtes Ausführungsbeispiel der Erfindung mit einem Aufnahmeteil 1, einem Verbindungsteil 2 und einem Verankerungsteil 3.

Das Verankerungsteil 3 verfügt über eine im wesentlichen zylinderförmige Verankerungshülse 4 mit zwei einander gegenüberliegenden und seitlich überstehenden Verankerungslaschen 5. Die Verankerungshülse 4 ist in eine Ausnehmung eines in Fig. 1 nicht dargestellten Trägerteiles unter Eingriff der Verankerungslaschen 5 mit dem Trägerteil einfügbar. Weiterhin ist das Verankerungsteil 3 mit einem Schirm 6 ausgebildet, der an dem in Einführrichtung des Verankerungsteiles 3 rückseitigen Ende der Verankerungshülse 4 angeordnet ist und die Verankerungshülse 4 radial überkragt. Der Schirm 6 ist in Richtung des freien Endes der Verankerungshülse 4 geöffnet. An dem freien Ende der Verankerungshülse 4 sind nach innen abgewinkelte stegartige Randlaschen 7 vorhanden, die an ihren äußeren Enden mit eine Raststruktur bildenden Rastnasen 8 ausgebildet sind.

Das Verbindungsteil 2 verfügt über einen Bolzenschaft 9, bei dem an einem freien Ende eine nach vorne angeschrägte Einführspitze 10 ausgebildet ist. Im Bereich der Einführspitze 10 weist der Bolzenschaft 9 eine Anzahl von Rastringen 11 auf, die eine weitere Raststruktur bilden und, wie weiter unten näher erläutert, beim Einführen des Bolzenschaftes 9 in die Verankerungshülse 4 mit den Rastnasen 8 zusammenwirken. An dem den Rastringen 11 gegenüberliegenden Ende sind an dem Bolzenschaft 9 eine Anzahl von schmiegsamen Dichtringen 12 ausgebildet. An dem der Einführspitze 10 gegenüberliegenden Ende verfügt das Verbindungsteil 2 über eine äußere erste Flanschscheibe 13 und eine innere zweite Flanschscheibe 14, die rundlich ausgebildet und in Längsrichtung des Verbindungsteiles 2 in einem Abstand voneinander angeordnet sind, so dass wischen den Flanschscheiben 13, 14 ein Zwischenraum 15 ausgebildet ist.

Das Aufnahmeteil 1 ist bei dem in Fig. 1 dargestellten Ausführungsbeispiel fertigungstechnisch sehr vorteilhaft insgesamt als flache, rechteckförmige Platte 16 ausgebildet, deren Dicke im wesentlichen dem Abstand zwischen den Flanschscheiben 13, 14 des Verbindungsteiles 2 entspricht. Parallel zu den kürzeren Randseiten ausgerichtet sind in der Platte 16 ein erstes Langloch 17 und eine zweites Langloch 18 ausgebildet, die zur Aufnahme von entsprechend dimensionierten Verbindungstegen eines in Fig. 1 nicht dargestellten Anbauteiles eingerichtet sind.

Im Mittenbereich der Platte 16 sind eine Anzahl von Armen 19 ausgebildet, die außenseitig an einem rundlichen Innenrand 20 der Platte 16 mit einem gegenüber dem Außendurchmesser der beiden Flanschscheiben 13, 14 kleineren Innendurchmesser angesetzt sind, sich gegenüber einer radialen Richtung abgewickelt nach innen erstrecken und mit einem als Aufnahmeelement dienenden geöffneten Innenring 21 in Verbindung stehen. Der Innenring 21 verfügt angrenzend an eine Einführöffnung 22 über eine angeschrägte und im wesentlichen radial ausgerichtete Führungsnase 23 sowie über eine abgewinkelte und mit einem federnden Rastende 24 in Richtung des Innenringes 21 weisende Arretiernase 25. Der Einführöffnung 22 gegenüberliegend ist die Platte 16 mit einem im wesentlichen parallel zu den kürzeren Randseiten ausgerichteten Einführschlitz 26 ausgebildet, der sich von dem Innenrand 20 bis zu der Außenseite der Platte 16 erstreckt.

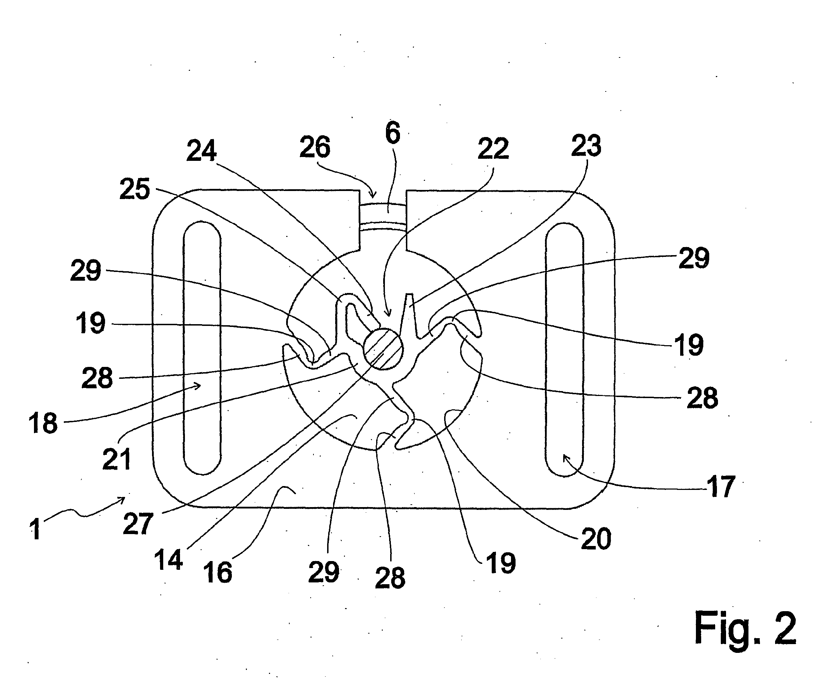

Fig. 2 zeigt bei dem Ausführungsbeispiel gemäß Fig. 1 einen Schnitt durch ein die beiden Flanschscheiben 13, 14 des Verbindungsteiles 2 verbindendes Zwischenstück 27 mit Blick auf das Aufnahmeteil 1. In der Darstellung gemäß Fig. 2 ist das Zwischenstück 27 nach Durchführen durch den Einführschlitz 26 und die Einführöffnung 22 innerhalb des Innenringes 21 angeordnet, wobei das Rastende 24 der Arretiernase 25 nach Einfedern das Zwischenstück 27 hintergreift und dadurch gegen Herausrutschen sichert.

Aus Fig. 2 ist weiterhin ersichtlich, dass bei dem dargestellten Ausführungsbeispiel jeder Arm 19 über einen gegenüber der direkten Verbindungslinie zwischen den Befestigungsbereichen des jeweiligen Armes 19 an dem Innenrand 20 sowie dem Innenring 21 abgewinkelten außenseitigen Armabschnitt 28 und einen ebenfalls gegenüber dieser direkten Verbindungslinie abgewinkelten innenseitigen Armabschnitt 29 verfügt, die in etwa rechtwinklig zueinander ausgerichtet sind. Dadurch verleiht jeder Arm 19 dem Innenring 21 eine relativ hohe Beweglichkeit in der Ebene der Platte 16, so dass dadurch das Verbindungsteil 2 zum Toleranzausgleich in den beiden Richtungen rechtwinklig zu der Längsrichtung des Verbindungsteiles 2 bewegbar ist. Da die beiden Flanschscheiben 13, 14 die Platte 16 im Bereich des Innenrandes 20 einschließen, ist dabei weiterhin eine hohe Querstabilität vorhanden, und das Verbindungsteil 2 ist in Längsrichtung fest mit dem Aufnahmeteil 1 verbunden.

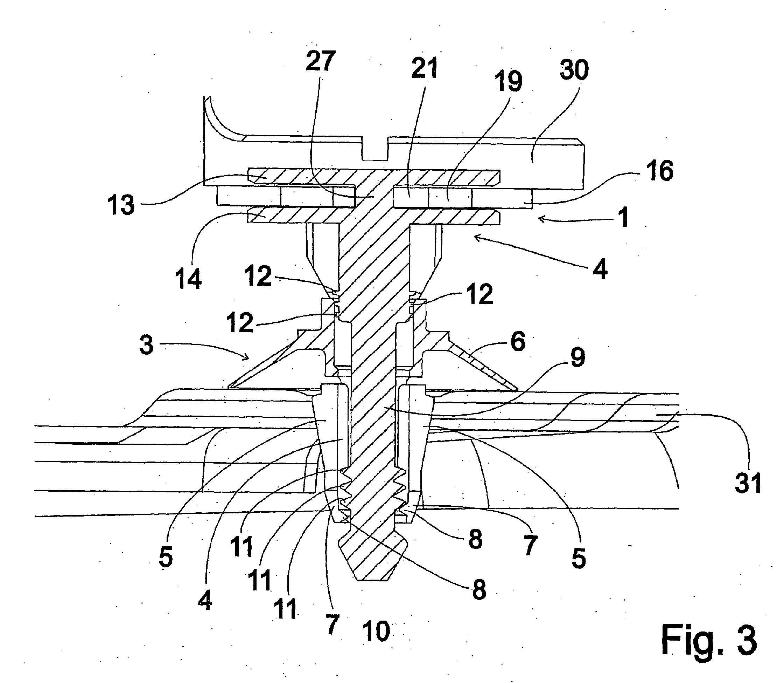

Fig. 3 stellt einen Längsschnitt durch das Ausführungsbeispiel gemäß Fig. 1 und Fig. 2 in einer Einbausituation mit einem mit dem Aufnahmeteil 1 verbundenen Anbauteil 30 und einem mit dem Verankerungsteil 3 verbundenen Trägerteil 31 dar, in der der Bolzenschaft 9 in die Verankerungshülse 4 eingeführt ist, die Rastnasen 8 und die Rastringe 11 der Raststrukturen jedoch noch nicht miteinander in Eingriff sind. Aus Fig. 3 ist ersichtlich, dass die an den Randlaschen 7 ausgebildeten Rastnasen 8 paarweise einander gegenüberliegend in unterschiedlichen Längspositionen angeordnet sind, deren Abstand jeweils dem halben Abstand der Rastringe 11 entspricht. Dadurch ist eine verhältnismäßig feine Abstufung für die relative Positionierung des Aufnahmeteiles 1 und des Verankerungsteiles 3 in Längsrichtung geschaffen.

Weiterhin ist Fig. 3 zu entnehmen, dass nach vollständigem Einführen des Bolzenschaftes 9 in die Verankerungshülse 4 die Dichtringe 12 eine Art Labyrinthdichtung bilden, während der Schirm 6 gegen die dem Anbauteil 30 zugewandte Seite des Trägerteiles 31 angedrückt wird und dadurch die zur Aufnahme des Verankerungsteiles 3 in das Trägerteil 31 eingebrachte Ausnehmung abdichtet. Dadurch ist eine sehr gute Abdichtung des Trägerteiles 31 erzielt.

Schließlich lässt Fig. 3 erkennen, dass die durch den Eingriff der beiden Flanschscheiben 13, 14 des Verbindungsteiles 2 mit der Platte 16 des Aufnahmeteiles 1 geschaffene Verbindung auch gegen verhältnismäßig hohe Auszugkräfte, die erforderlich sind, um die Verrastung der Rastnasen 8 und der Rastringe 11 zu trennen, widerstandsfähig ist.

## Patentansprüche

1. Vorrichtung zum Verbinden eines Trägerteiles (31) und eines Anbauteiles (30) mit einem Verbindungsteil (2), das zwei über ein Zwischenstück (27) miteinander verbundene Flanschscheiben (13, 14) sowie eine Raststruktur (11) aufweist, mit einem Aufnahmeteil (1), das über eine Anzahl von Armen (19) verfügt, die mit einem ringartigen geöffneten Aufnahmeelement (21) verbunden sind und sich jeweils von dem Aufnahmeelement (21) nach außen zu einem außenseitigen Befestigungsbereich erstrecken, und mit einem Verankerungsteil (3), das mit einer weiteren Reststruktur (8) ausgebildet ist, die mit der Raststruktur (11) des Verbindungsteiles (2) zum Einstellen eines Abstandes zwischen dem Aufnahmeteil (1) und dem Verankerungsteil (3) zusammenwirkt wobei das Aufnahmeteil (1) einen rundlichen Innenrand (20) eines plattenförmigen Bereichs (16) mit einem gegenüber dem Außendurchmesser der Flanschscheiben (13, 14) kleineren Innendurchmesser auf weist und die Flanschscheiben (13, 14) randseitig den plattenförmigen Bereich (16) einschließen, **dadurch gekennzeichnet, dass** die Arme (19) gegenüber der direkten Verbindungslinie zwischen dem Aufnahmeelement (21) sowie dem außenseitigen Befestigungsbereich wenigstens abschnittsweise abgewinkelt angeordnet sowie an dem rundlichen Innenrand (20) angesetzt sind.

2. Vorrichtung nach Anspruch 1, **dadurch gekennzeichnet, dass** das Aufnahmeteil (1) als flache Platte (16) ausgebildet ist.

3. Vorrichtung nach Anspruch 1 oder Anspruch 2, **dadurch gekennzeichnet, dass** wenigstens ein Arm (19) wenigstens zwei Armabschnitte (28, 29) aufweist, die gegenüber der direkten Verbindungslinie zwischen dem Aufnahmeelement (21) und dem außenseitigen Befestigungsbereich abgewinkelt sind.

4. Vorrichtung nach Anspruch 3, **dadurch gekennzeichnet, dass** die Armabschnitte (28, 29) rechtwinklig zueinander ausgerichtet sind.

5. Vorrichtung nach einem der Ansprüche 1 bis 4, **dadurch gekennzeichnet, dass** das Aufnahmeelement als ein im wesentlichen ringförmiger Innenring (21) ausgebildet ist, der eine Einführöffnung (22) aufweist, an der randseitig eine radial ausgerichtete Führungsnase (23) und eine ein in Richtung der Einführöffnung (22) federndes Rastende (24) aufweisende Arretiernase (25) angeordnet sind.

6. Vorrichtung nach einem der Ansprüche 1 bis 5, **dadurch gekennzeichnet, dass** eine Raststruktur Rastnasen (8) und die andere Raststruktur umlaufende Rastringe (11) aufweisen.

7. Vorrichtung nach Anspruch 6, **dadurch gekennzeichnet, dass** die Rastnasen (8) in Längsrichtung in einem Abstand voneinander angeordnet sind, der der Hälfte des Abstandes zwischen den Rastringen (11) entspricht.

## Claims

1. Device for connecting a support part (31) and an add-on part (30) to a connecting part (2) which has two flange discs (13, 14), connected to one another via an intermediate piece (27), and a locking structure (11), comprising a receiving part (1) which has a number of arms (19) which are connected to an annular open receiving element (21) and extend in each case from the receiving element (21) outwards to an outside fixing region, and comprising an anchoring part (3) which is formed with a further locking structure (8) which cooperates with the locking structure (11) of the connecting part (2) for establishing a distance between the receiving part (1) and the anchoring part (3), the receiving part (1) having a round inner edge (20) of a plate-like region (16) with an internal diameter smaller than the external diameter of the flange discs (13, 14) and the flange discs (13, 14) enclosing the plate-like region (16) at the edge, **characterized in that** the arms (19) are arranged so as to be angled at least in sections relative to the direct connecting line between the receiving element (21) and the outside fixing region and are mounted on the round inner edge (20).

2. Device according to Claim 1, **characterized in that** the receiving part (1) is in the form of a flat plate (16).

3. Device according to Claim 1 or 2, **characterized in that** at least one arm (19) has at least two arm sections (28, 29) which are angled relative to the direct connecting line between the receiving element (21) and the outside fixing region.

4. Device according to Claim 3, **characterized in that** the arm sections (28, 29) are oriented at right angles to one another.

5. Device according to any of Claims 1 to 4, **characterized in that** the receiving element is in the form of a substantially annular inner ring (21) which has an insertion opening (22), at the edge of which a radially oriented guide lug (22) and a locking lug (25) having a locking end (24) which is springy in the direction of the insertion opening (22) are arranged.

6. Device according to any of Claims 1 to 5, **characterized in that** one locking structure has detents (8) and the other locking structure has all-round locking rings (11).

7. Device according to Claim 6, **characterized in that** the detents (8) are arranged a distance apart in the longitudinal direction, which distance corresponds to half the distance between the locking rings (11).

## Revendications

1. Dispositif pour l'assemblage d'un élément formant support (31) et d'un élément rapporté (30), comprenant un élément de liaison (2), qui est muni de deux disques formant collerettes (13, 14), raccordés l'un à l'autre par l'intermédiaire d'un élément intercalaire (27), ainsi que d'une structure d'accrochage (11), comprenant un élément formant logement d'emmanchement (1), qui est muni d'un certain nombre de segments (19) qui sont raccordés par un élément récepteur de forme annulaire ouvert (21) et qui s'étendent respectivement, depuis l'élément récepteur (21) vers l'extérieur en direction d'une zone de fixation extérieure, et comprenant un élément d'ancrage (3), qui est muni d'une autre structures d'accrochage (8), qui opère en combinaison avec la structure d'accrochage (11) de l'élément de liaison (2) pour définir un intervalle d'écartement entre l'élément formant logement d'emmanchement (1) et l'élément d'ancrage (3), l'élément formant logement d'emmanchement (1) comportant en l'occurrence une paroi intérieure de forme circulaire (20) d'une zone en forme de plaque (16), d'un diamètre intérieur plus petit comparativement au diamètre extérieur des disques formant collerettes (13, 14), et les disques formant collerettes (13, 14) enserrant latéralement la zone en forme de plaque (16), **caractérisé en ce que** les segments (19) sont disposés, par rapport à la ligne de raccordement directe, entre l'élément récepteur (21) ainsi que la zone de fixation extérieure, au moins partiellement de manière angulaire et sont réalisés attenants au bord intérieur circulaire (20).

2. Dispositif selon la revendication 1, **caractérisé en ce que** l'élément formant logement d'emmanchement (1) se présente sous la forme d'une plaque plate (16).

3. Dispositif selon la revendication 1 ou 2, **caractérisé en ce qu'**au moins un segment (19) comporte au moins deux portions de segment (28, 29) qui, par rapport à la ligne de raccordement directe entre l'élément récepteur (21) et la zone de fixation extérieure sont agencées suivant une disposition angulaire.

4. Dispositif selon la revendication 3, **caractérisé en ce que** les portions de segment (28, 29) sont orientées de manière angulaire l'une par rapport à l'autre.

5. Dispositif selon l'une des revendications 1 à 4, **caractérisé en ce que** l'élément récepteur se présente sous la forme d'un élément annulaire intérieur (21) de forme sensiblement circulaire, qui comporte une ouverture d'introduction (22), au niveau des bords de laquelle sont disposés un ergot de guidage (23) orienté dans le plan radial et un ergot de blocage en position (25) comportant une extrémité d'accrochage réagissant élastiquement dans la direction de l'ouverture d'introduction (22).

6. Dispositif selon l'une des revendications 1 à 5, **caractérisé en ce qu'**une structure d'accrochage est munie d'ergots d'accrochage (8) et **en ce que** l'autre structure d'accrochage est munie d'anneaux de mise en prise d'encastrement périphériques (11).

7. Dispositif selon la revendication 6, **caractérisé en ce que** les ergots d'accrochage (8) sont respectivement disposés dans le plan longitudinal à une certaine distance l'un de l'autre, distance qui correspond à la moitié de l'intervalle d'écartement existant entre les anneaux de mise en prise d'encastrement (11).
